# EUROPÄISCHE PATENTSCHRIFT

(11) **EP 1 998 984 B1**
(45) Veröffentlichungstag und Bekanntmachung des Hinweises auf die Patenterteilung: **12.05.2010**
(21) Anmeldenummer: 07703230.8
(22) Anmeldetag: 02.02.2007
(51) Int. Cl.: B60R 21/268

(54) **KALTGASGENERATOR**
COLD GAS GENERATOR
GENERATEUR DE GAZ FROID

(30) Priorität: 17.03.2006 DE 102006012711
(43) Veröffentlichungstag der Anmeldung: 10.12.2008
(73) Patentinhaber: Häge, Martin, 74357 Bönningheim (DE)
(72) Erfinder: Häge, Martin, 74357 Bönningheim (DE)
(74) Vertreter: Maser, Jochen
(86) Internationale Anmeldenummer: PCT/EP2007/000907
(87) Internationale Veröffentlichungsnummer: WO 2007/107203

(56) Entgegenhaltungen:
- WO-A-99/48731
- US-A- 5 927 753
- US-A1- 2004 169 359

## Beschreibung

Die Erfindung betrifft einen Gasgenerator gemäß dem Oberbegriff des Anspruchs 1.

Es sind Kaltgasgeneratoren bekannt, die aus einem Druckbehälter bestehen, in dem das Kaltgas unter Druck gespeichert ist und einem Mundstück, durch das das Druckgas entweichen kann, wenn durch einen Öffnungsmechanismus die Ausströmöffnungen freigegeben werden.

Meist besteht dieser Öffnungsmechanismus aus einer Membran, die fest mit dem Gasdruckbehälter verbunden ist und dadurch eine zentrale Ausströmöffnung verschließt. Diese Membran wird meist durch einen Zündmechanismus oder eine geeignete Mechanik zerstört, wobei die Ausströmöffnung freigegeben wird.

Für diesen Zündmechanismus wird häufig Pyrotechnik eingesetzt. Sie erzeugt einen kurzzeitigen Hochdruck, der die Verschlussmembran zerstört, wie es in EP 1 561 649 A1, in EP 1 319 558 B1 oder in EP 1 424 246 A1 beschrieben ist. In EP 1 294 592 B1 wird eine mechanische Einrichtung beschrieben, die im Ruhezustand die Membran stützt und durch Einwirkung einer pyrotechnischen Ladung diese Stütze aufhebt, wodurch die Membran zerstört und die Öffnung freigegeben wird. Es kommt auch vor, dass die Verschlussmembran undefiniert zerstört werden könnte, wodurch die Ausströmöffnung blocklert wird. Um dies zu verhindern, werden oft aufwändige Konstruktionen eingesetzt.

Der Stand der Technik weist einige Schwierigkeiten auf. So wird immer eine komplexe Fertigungseinrichtung benötigt, die die Verschlussmembran mit dem Druckbehälter verbindet. Außerdem ist es erforderlich, die Auslöseeinrichtung selbst über eine komplexe Fertigungseinrichtung dicht mit dem Druckbehälter zu verbinden, um zu vermeiden, dass nach der Zündung das pyrotechnische Gas unkontrolliert entweicht. Die Befülleinrichtung ist sehr komplex ausgeführt, die oft die Einrichtung zum dichten Verschließen des Druckbehälters beinhalten muss. Ein großer Nachteil des technischen Standes ist, dass eine Funktionsprüfung und damit eine Qualitätskontrolle im Vorfeld nicht möglich ist. Ein weiterer Nachteil besteht darin, dass der Kaltgasgenerator, nachdem er Gas freigesetzt hat, nicht wiederverwendet werden kann oder erst nach einen komplexen Reparaturvorgang mit einer komplexen Befülleinrichtung wieder befüllt und anschließend wieder eingesetzt werden kann.

Weiterhin beschreibt die US 2004/0109359 A1 einen Kaltgasgenerator wie im Oberbegriff des Anspruchs 1.

Der Erfindung liegt deshalb die Aufgabe zugrunde, einen Kaltgasgenerator zu schaffen, der im Vorfeld vor dem Einbau eine Funktionsprüfung der Öffnungsfunktion ermöglicht und ohne Zündung von pyrotechnischem Gas auskommt.

Diese Aufgabe wird erfindungsgemäß durch die Merkmale des Anspruchs 1 gelöst. Weitere vorteilhafte Ausgestaltungen und Weiterbildungen sind in den weiteren Ansprüchen angegeben.

Die Ausgestaltung einer elektrisch ansteuerbaren Verschlusseinrichtung, welche in eine Behälteröffnung eines Druckbehälters einsetzbar ist, weist den Vorteil auf, dass die Schließposition und Arbeitsposition vor dem Einbau in einem Druckbehälter in einer Prüfeinrichtung überprüfbar ist. Dadurch wird sichergestellt, dass nur funktionstüchtige Verschlusseinrichtungen für einen Kaltgasgenerator eingesetzt werden. Darüber hinaus weist die elektrisch ansteuerbare Verschlusseinrichtung den Vorteil auf, dass durch eine Bestromung der Verschlusseinrichtung ein Arbeitszustand oder eine Arbeitsposition ansteuerbar ist, wodurch die Austrittsöffnung im Hinblick auf die ausströmbare oder befüllbare Menge eines Druckgases einstellbar ist. Dadurch kann zum einen im Bedarfsfall die Menge des auszuströmenden Gases angesteuert werden. Dies ermöglicht, dass beispielsweise eine diskontinuierliche oder intervallartige Ausströmung als auch eine zunehmende oder abnehmende Menge an ausströmendem Gas für den jeweiligen Anwendungsfall ansteuerbar ist. Darüber hinaus kann die Bestromung auch dadurch verwendet werden, damit eine zielgerichtete Befüllung beziehungsweise Wiederbefüllung möglich ist. Die in die Behälteröffnung des Druckbehälters einsetzbare Verschlusseinrichtung weist des Weiteren den Vorteil auf, dass diese wiederverwendbar und die einzelnen Komponenten recycelbar sind.

Die erfindungsgemäße Ausgestaltung sieht vor, dass die Verschlusseinrichtung zwischen dem Deckel und einem Körper, vorzugsweise einem rotationssymmetrischen Körper, eine Austrittsöffnung für Druckgas umfasst, welche durch ein elektrisch ansteuerbares Dehnelement öffenbar ist, wobei bei Bestromung des Dehnelementes zwischen dem Deckel und dem Körper ein Spalt erzeugt wird. Dadurch kann eine kompakte Bauweise der Verschlusseinrichtung erzielt werden, welche in einem Druckbehälter vorgesehen ist. Darüber hinaus ist konstruktiv eine einfache Ausgestaltung geschaffen, die ebenso eine einfache und kostengünstige Fertigung sowie eine hohe Qualitätssicherung ermöglicht.

Nach einer vorteilhaften Ausgestaltung der Erfindung ist vorgesehen, dass die Verschlusseinrichtung einen Deckel aufweist, der mediendicht in die Behälteröffnung, insbesondere lösbar, einsetzbar ist. Dadurch kann ein einfacher Verschluss des Druckbehälters ermöglicht sein. Beispielsweise ist eine Verschraubung vorgesehen, welche dem aufgebrachten Druck in dem Druckbehälter stand hält und mediendicht schließt. Alternativ kann auch eine Verpressung oder Verschweißung als auch eine Umbördelung des Behälterrandes vorgesehen sein, um den Deckel sicher aufzunehmen.

Das elektrisch ansteuerbare Dehnelement ist bevorzugt in dem rotationssymmetrischen Körper vorgesehen. Dadurch können einfache Kraftverhältnisse gegeben sein, um einen Öffnungsquerschnitt, bevorzugt im Zehntel-Millimeter-Bereich, zwischen dem rotationssymmetrischen Körper und dem Deckel anzusteuern.

Des Weiteren ist bevorzugt vorgesehen, dass der rotationssymmetrische Körper durch ein unter Vorspannung angeordnetes Federelement mit einem Befestigungselement am Deckel in einer Schließstellung gehalten ist. Durch diese Anpresskraft wird eine Dichtheit der Austrittsöffnung in einer Ruheposition erzielt. Gleichzeitig kann sichergestellt werden, dass erst ab einem vorbestimmten Stellweg oder Arbeitshub des Dehnelementes ein Öffnen der Austrittsöffnung erzielbar ist.

Zur Erhöhung des Dichtungsdrucks und zur gleichzeitigen zentrischen Positionierung des rotationssymmetrischen Körpers zum Deckel ist bevorzugt vorgesehen, dass zwischen dem Deckel und einer daran anliegenden Stirnseite des rotationssymmetrischen Körpers eine kreisförmige Rippe mit einer daran angreifenden kreisförmigen Nut vorgesehen ist. Die Nut kann sowohl an dem Deckel als auch an der Stirnfläche des rotationssymmetrischen Körpers vorgesehen sein.

Des Weiteren kann bevorzugt zwischen einer Unterseite des Deckels und dem stirnseitigen Rand des rotationssymmetrischen beziehungsweise topfförmigen Körpers eine geeignete Dichtung aus nachgiebigem Material zur Abdichtung der Austrittsöffnung in einer Schließstellung der Verschlusseinrichtung eingelegt sein.

Bevorzugt ist zwischen einer Innenwand des Druckbehälters und der eingesetzten Verschlusseinrichtung ein Ringspalt vorgesehen, damit das Druckgas im Bedarfsfall durch die Austrittsöffnung nach außen strömen kann.

Zur einfachen Befüllung kann bevorzugt vorgesehen sein, dass eine Betätigungsvorrichtung ausgebildet ist, die mechanisch auf das Befestigungselement einwirkt, welches den rotationssymmetrischen Körper mediendicht zum Deckel fixiert, damit das Druckgas durch die Austrittsöffnung in den Druckbehälter einfüllbar ist.

Alternativ kann die Betätigungsvorrichtung während dem Befüllvorgang die Verschlusseinrichtung bestromen, wodurch das Dehnelement die Verschlusseinrichtung in einer geöffneten Position hält.

Nach einer weiteren bevorzugten Ausführungsform der Erfindung ist vorgesehen, dass an einem Außenumfang des Druckbehälters ein Aufnahmeelement vorgesehen ist, welches zur Positionierung eines Airbags, ein mit einem Druckmedium befüllbarer Gegenstand oder eine Befülleinrichtung vorgesehen ist.

Der vorbeschriebene Kaltgasgenerator kann durch die erfindungsgemäße Ausgestaltung der elektrisch ansteuerbaren Verschlusseinrichtung auf vielfältige Weise universell sowie mobil als auch stationär eingesetzt werden. Mobile Einsatzgebiete sind beispielsweise Airbags in Fahrzeugen oder auch in Bereichen, die wenig Platz zur Unterbringung aufweisen. In diesem Fall kann der Airbag selbst in diesem Bereich montiert werden und eine Zuführungsleitung zum entfernt untergebrachten Kaltgasgenerator aufweisen. Als rational nähere Einrichtungen kommen beispielsweise Verschlusssysteme in Frage, die in Notfällen bei Alarm sicherheitssensible Einrichtung in kurzer Zeit dauerhaft verschließen, um beispielsweise Werte zu schützen, Kontaminationen oder das Auslaufen und Eindringen von Wasser oder Flüssigkeiten zu verhindern. Diese erfindungsgemäße Verschlusseinrichtungen in Kaltgasgeneratoren können dann in der Regel nach Beendigung des Notfalles oder des Einsatzfalles durch autorisiertes Personal geöffnet und wieder in einen aktiven Zustand rückgesetzt werden.

Die Erfindung sowie weitere vorteilhafte Ausführungsformen und Weiterbildungen derselben werden im Folgenden anhand des in der Zeichnung dargestellten Beispiels näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigt:

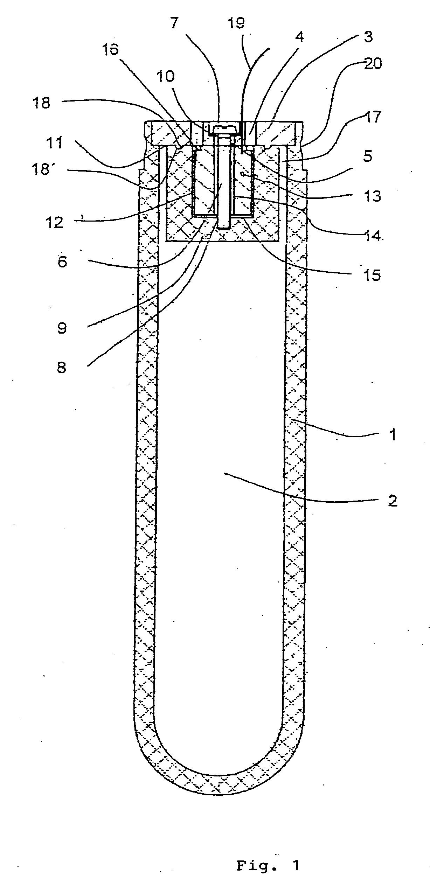

- Figur 1: eine schematische Schnittdarstellung eines Kaltgasgenerators mit einer erfindungsgemäßen Verschlusseinrichtung.

Die Figur 1 zeigt eine schematische Schnittdarstellung eines Kaltgasgenerators mit einer erfindungsgemäßen Verschlusseinrichtung.

Ein Druckbehälter 1 ist am offenen Ende durch einen Deckel 3 verschlossen. Dies kann durch eine Verschweißung mit dem Druckkörper 1 oder auch durch eine dichte Verschraubung geschehen. Außerdem ist der äußere Rand des Druckkörpers 1 so gestaltet, dass entweder das Mundstück eines Airbags oder eine anwendungsspezifische Einrichtung dicht angesetzt werden und durch den Kaltgasgenerator befüllt werden kann. Zum Befüllen des Druckbehälters 1 ist es möglich, das Mundstück des Airbags, bzw. die angesetzte Einrichtung gegen eine Befülleinrichtung auszutauschen und an den Rand anzusetzen. Als einfache Lösung für die lösbare Befestigung eines Mundstückes bietet sich beispielsweise eine dichte Verschraubung an.

Der Deckel 3 dient außerdem als Halterung für die übrigen Komponenten der Verschlusseinrichtung des Kaltgasgenerators. Die gesamte Verschlusseinrichtung besteht damit aus dem Deckel 3 selbst, einem rotationssymmetrischen, vorzugsweise topfförmigen Körper 9, einem Stift 6 mit Kopf 7 und einem Dehnelement 13. Diese Verschlusseinrichtung kann vor der Endmontage einfach vorgefertigt werden und auf einfache Art in einer geeigneten Prüfeinrichtung geprüft werden, ohne dass der Druckbehälter 1 angesetzt sein muss, wodurch ein Höchstmass an Betriebssicherheit und Qualitätssicherung gewährleistet werden kann.

Der Deckel 3 weist Ausströmöffnungen 4 auf, durch die das Druckgas 2 ausströmen kann oder in den Druckbehälter 1 eingefüllt werden kann. In der Mitte des Deckels 3 ist eine abgesetzte Bohrung oder Stufenbohrung 5, durch die ein Stift 6 mit einem Kopf 7 nach innen ragt. Dieser Stift 6 könnte auch eine Schraube 6 sein. Am unteren Ende des Stiftes 6 ist ein rotationssymmetrischer Körper 9 befestigt, der hier beispielhaft als topfförmiger Körper 9 ausgebildet ist, dessen oberer Rand außerhalb der Austrittsöffnungen 4 des Deckels 3 gegen die Unterseite 11 des Deckels 3 gedrückt wird. Für den nötigen Dichtungsdruck sorgt ein Federelement 10, insbesondere eine Tellerfeder, das in der dargestellten Ausführungsform zwischen dem Deckel 3 und dem Kopf 7 des Stiftes 6 angeordnet ist. Dieser für die Dichtheit des verschlossenen Kaltgasgenerators benötigte Dichtungsdruck wird durch das Druckgas 2 selbst unterstützt, dessen Druck auf den Boden des topfförmigen Körpers 9 wirkt. Der topfförmige Körper 9 füllt nicht den ganzen Innendurchmesser des Druckbehälters aus, sondern lässt einen ringförmigen Bereich oder Ringspalt 17 frei, in dem sich ebenfalls das Druckgas 2 befindet. Es ist also keine besondere Passung zwischen dem topfförmigen Körper 9 und dem Druckbehälter 1 erforderlich, was die Fertigung und die Montage vereinfacht und gleichzeitig Reibung vermeidet. Der Deckel 3 könnte an seinem Rand vorteilhafterweise eine ringförmige Rippe 18 aufweisen, die gegen den Rand des topfförmigen Körpers 9 gedrückt wird und durch den dadurch höheren Dichtungsdruck gegenüber einer flächigen Anlage eine höhere Dichtigkeit gewährleistet. Weiterhin dient vorteilhafterweise eine am Rand des topfförmigen Körpers 9 vorhandene Nut 18', die mit der Rippe 18 korrespondiert, der Zentrierung des topfförmigen Körpers 9. Es ist auch denkbar, dass diese Rippe 18 am Rand des topfförmigen Körpers 9 und die Nut an der Unterseite 11 des Deckels 3 angebracht ist. Eine andere nicht dargestellte Möglichkeit wäre die Einlage eines Dichtelements aus einem nachgiebigen Material, wodurch eventuelle Unebenheiten zwischen Deckel 3 und topfförmigem Körper 9 ausgeglichen werden könnten und die Dichtsicherheit nochmals erhöht wird. Eine andere Möglichkeit der Zentrierung des topfförmigen Körpers wären beispielsweise nicht dargestellte kurze radiale Rippen am Außendurchmesser des topfförmigen Körpers 9, die den Zwischenraum zur Innenwand des Druckbehälters 1 überbrücken.

Innerhalb des topfförmigen Körpers 9 ist um den Stift 6 herum ein Dehnkörper 13 angeordnet, durch dessen zentrische Bohrung 14 die Schraube 6 gesteckt ist, die diesen damit zentriert und der die Höhe zwischen dem Boden 15 des topfförmigen Körpers 9 und der Unterseite 11 des Deckels 3 mit geringem Spiel ausfüllt. An der Oberseite ist der Dehnkörper 13 beispielsweise durch einen Stufenrand 16 so gestaltet, dass die Ausströmöffnungen 4 des Deckels 3 frei sind. Dieser Dehnkörper 13 ist durch den Deckel 3 hindurch über isolierte elektrische Leitungen 19 mit einer Stromversorgung verbunden. Über diese elektrische Verbindung kann der Dehnkörper 13 durch geeignete Bestromung in sehr kurzer Zeit zur Ausdehnung aktiviert werden. Der Dehnkörper 13 stützt sich bei Längsausdehnung zwischen der Unterseite 11 des Deckels 3 und dem Boden 15 des topfförmigen Körpers 9 ab. Dabei werden diese elektrischen Leitungen 19 beispielsweise mit einer nicht dargestellten geeigneten Kontaktierung am Deckel 3 verbunden, die mit entsprechenden Kontakten des angesetzten Mundstücks der anwendungsspezifischen Einrichtung oder der Befülleinrichtung korrespondiert, oder sie werden einfach über Steckverbinder mit der Stromversorgung dieser Einrichtungen verbunden. Da der topfförmige Körper 9 für die Abdichtung des Druckgases im Druckbehälter 1 sorgt, ist es nicht erforderlich, die elektrischen Leitungen 19 dicht durch den Deckel 3 zu führen, wodurch die Konstruktion zusätzlich vereinfacht wird. Der Dehnkörper 13 kann beispielsweise als viellagiges piezoelektrisches Element gestaltet sein. Andere thermische Dehnkörper 13 oder Materialien mit Memory-Effekt können durch hohe Ströme kurzzeitig stark erhitzt werden, um die gewünschte Längenausdehnung zu erzielen.

Wird nun der Dehnkörper 13 bestromt, hebt er den topfförmigen Körper 9 gegen den Gasdruck und das Federelement 10 vom Deckel 3 ab, so dass sich zwischen der Unterseite 11 des Deckels 3 und dem Rand des topfförmigen Körpers 9 ein kleiner Spalt in einer Größenordnung 1/100 bis 1 mm, insbesondere circa 1/10 Millimeter, bildet. Dieser Spalt stellt eine Verbindung zwischen den Ausströmöffnungen 4 des Deckels 3 und dem Ringspalt 17 zwischen dem topfförmigen Körper 9 und dem Innendurchmesser des Druckbehälters 1 her, so dass das Druckgas 2 entweichen kann. Die Höhe des Spaltes und der Durchmesser des Überströmrandes des topfförmigen Körpers 9 ergeben den Durchströmquerschnitt für das ausströmende Druckgas 2. Daraus ergeben sich eine Fülle von Einstellmöglichkeiten, indem abhängig von der Anwendung durch die Auswahl des Durchmessers des topfförmigen Körpers 9 und der Höhe des Spaltes sowie die Größe der Ausströmöffnungen 1 die Ausströmzeit des Druckgases festgelegt werden kann.

Nachdem das Druckgas ausgeströmt ist und die Bestromung des Dehnkörpers 13 beendet ist, bzw. der Dehnkörper 13 abgekühlt ist und sich wieder zusammengezogen hat, kehrt der topfförmige Körper 9 durch die Kraft des Federelements 10 wieder in seine Ausgangslage zurück. Prinzipiell ist damit der Kaltgasgenerator wieder bereit, befüllt zu werden. Hierzu wird das Mundstück des Airbags oder der anwendungsspezifischen Einrichtung von dem Kaltgasgenerator entfernt und gegen eine Befülleinrichtung ausgetauscht. Das erfordert keine besondere Fertigungseinrichtung, so dass diese Befüllung prinzipiell am Ort der Einrichtung durchgeführt werden kann.

Für die Befüllung bieten sich prinzipiell zwei verschiedene Möglichkeiten an. Nachdem das Mundstück der Befülleinrichtung dicht an den Kaltgasgenerator angesetzt ist, kann beispielsweise der Druckbehälter 1 mechanisch geöffnet werden, indem einfach über den Stift 6 der topfförmige Körper 9 gegen das Federelement 10 nach unten gedrückt wird, wodurch sich der Spalt zwischen der Unterseite 11 des Deckels 3 und dem Rand des topfförmigem Körpers 9 öffnet. Eine andere Möglichkeit ist, den Dehnkörper 13 zu bestromen, der dann ebenfalls den Spalt öffnet. Nachdem der Druckbehälter 1 auf eine der beschriebenen Arten geöffnet ist, kann durch Öffnen eines Ventils der Befülleinrichtung das Druckgas 2 eingefüllt werden.

Für die Befüllung können je nach Anwendung und Einsatzort verschiedene Einrichtungen verwendet werden. Die Befüllung ist beispielsweise durch eine mit Druckgas 2 gefüllte Kartusche möglich, die lagermäßig beim Anwender des Kaltgasgenerators verfügbar ist und in eine geeignete Halterung eingesetzt wird, die mit dem Mundstück des Kaltgasgenerators verbunden wird. Nachteilig ist dabei in der Regel, dass die Kartusche nur einmal zu verwenden ist. Eine andere Möglichkeit wäre die Befüllung über eine Hochdruckpumpe. Dies erfordert allerdings, dass dieselbe und das benötigte Gas in geeigneter Form beim Anwender verfügbar ist oder dass der Kaltgasgenerator von der anwendungsspezifischen Einrichtung entfernt wird, damit er bei einem Unternehmen befüllt werden kann, das über die geeignete Einrichtung verfügt.

Es ist auch denkbar, dass die Befülleinrichtung mit einer genau definierten Menge Flüssiggas gefüllt ist, das drucklos per Schwerkraft in den Kaltgasgenerator fließt, dort durch die natürliche Erwärmung den Aggregatzustand ändert und damit den geforderten Gasdruck aufbaut. Nachteilig ist wie bei allen kryogenen Gasen, dass die Handhabung wegen der in der Regel sehr niedrigen Temperaturen besondere Kenntnisse erfordert, wenn beispielsweise Vereisung durch Luftfeuchtigkeit verhindert werden soll, dass die Befülleinrichtung gut isoliert sein muss, damit genügend Transportzeit vom Flüssiggashersteller bis zum Anwender zur Verfügung steht. Damit steht die Befülleinrichtung auch nicht lagermäßig beim Anwender zur Verfügung. Auch erfordert die Befüllung eine definierte Stellung des Kaltgasgenerators und eine vorherige Evakuierung desselben, um eine Vermischung des Kaltgases mit Luft zu verhindern.

Eine besonders einfache Ausführung bietet sich an, wenn die Befülleinrichtung auf ähnliche Art gestaltet ist, wie der Kaltgasgenerator selbst. Dann wird die Befülleinrichtung gleichzeitig mit dem Kaltgasgenerator durch Bestromung der Dehnkörper 13 oder mechanische Betätigung der federbelasteten Stifte 6 geöffnet, so dass sich zwischen der Befülleinrichtung und dem Kaltgasgenerator ein Druckgleichgewicht einstellt, das dem geforderten Nenndruck des Kaltgasgenerators entspricht, bevor Befülleinrichtung und Kaltgasgenerator wieder verschlossen werden. Eine solche Befülleinrichtung kann lagermäßig beim Anwender verfügbar sein. Diese Art der Befüllung hat auch den Kostenvorteil der Wiederverwendbarkeit der Befülleinrichtung, nachdem sie beim Hersteller neu befüllt wurde. Auch kann eine solche Befülleinrichtung ein Vielfaches der für den Kaltgas benötigten Gasmenge beinhalten, so dass mit einer einzigen Befülleinrichtung mehrere Kaltgasgeneratoren befüllt werden können. Dies ist vor allem dann sehr vorteilhaft, wenn beispielsweise ein Verschlusssystem mehrere solcher Kaltgasgeneratoren aktiviert hat.

## Patentansprüche

1. Kaltgasgenerator mit einem mit Druckgas befüllbaren Druckbehälter (1), der an einem Ende einen geschlossenen Boden und am anderen Ende eine Behälteröffnung umfasst, mit einer in die Behälteröffnung einsetzbaren elektrisch ansteuerbaren Verschlusseinrichtung, welche in einer Arbeitsposition bestromt ist und eine Austrittsöffnung der Verschlusseinrichtung öffnet, **dadurch gekennzeichnet, dass** die Verschlusseinrichtung zwischen einem Deckel (3) und einem Körper (9) eine Austrittsöffnung für Druckgas aufweist, welche durch ein elektrisch ansteuerbares Dehnelement (13) öffenbar ist, indem zwischen dem Deckel (3) und dem Körper (9) durch das Dehnelement (13) ein Spalt erzeugt wird.

2. Kaltgasgenerator nach Anspruch 1, **dadurch gekennzeichnet, dass** die Verschlusseinrichtung einen Deckel (3) aufweist, der mediendicht in die Behälteröffnung anbringbar ist.

3. Kaltgasgenerator nach Anspruch 2, **dadurch gekennzeichnet, dass** der Deckel (3) lösbar an der Behälteröffnung anbringbar ist.

4. Kaltgasgenerator nach Anspruch 1, **dadurch gekennzeichnet, dass** das Dehnelement (13) in dem Körper (9), der topfförmig ausgebildet ist, vorgesehen ist.

5. Kaltgasgenerator nach Anspruch 1 , **dadurch gekennzeichnet, dass** der Körper (9) durch ein unter Vorspannung angeordnetes Federelement (10) mit einem Befestigungselement (6) an dem Deckel (3) in einer Schließstellung gehalten ist.

6. Kaltgasgenerator nach Anspruch 1, **dadurch gekennzeichnet, dass** der Deckel (3) an seiner Unterseite (11) eine kreisförmige Rippe (18) aufweist, die mit einer ebenfalls kreisförmigen Nut (18') am Rand des topfförmigen Körpers (9) korrespondiert, wobei insbesondere die Tiefe der Nut (18') etwas geringer ist als die Höhe der Rippe (18).

7. Kaltgasgenerator nach Anspruch 1, **dadurch gekennzeichnet, dass** zwischen der Unterseite (11) des Deckels (3) und dem Rand des topfförmigen Körpers (9) eine geeignete Dichtung aus einem nachgiebigen Material zur Abdichtung der Austrittsöffnung in einer Schließstellung der Verschlusseinrichtung eingelegt ist.

8. Kaltgasgenerator nach Anspruch 1, **dadurch gekennzeichnet, dass** sich zwischen dem topfförmigen Körper (9) und der Innenwand des Druckbehälters (1) ein Ringspalt (17) befindet.

9. Kaltgasgenerator nach Anspruch 8, **dadurch gekennzeichnet, dass** in dem Ringspalt (17) zwischen dem topfförmigen Körper (9) und der Innenwand des Druckbehälters (1) Längsrippen vorgesehen sind, durch die der topfförmige Körper (9) zentriert gehalten ist, wobei insbesondere die Längsrippen am Körper (9) mit geringem Spiel angreifen.

10. Kaltgasgenerator nach Anspruch 1, **dadurch gekennzeichnet, dass** ein Stift (6) mit einem Kopf (7), vorzugsweise eine Schraube, vorgesehen ist, die mit dem Körper (9), insbesondere durch ein Sackgewinde (8), verbunden ist und ein Dehnelement (13) aufnimmt.

11. Kaltgasgenerator nach Anspruch 10, **dadurch gekennzeichnet, dass** der Stift (6) fest mit dem Körper (9) verbunden ist oder ein einstückiges Bestandteil desselben ist und der Kopf (7) als Mutter ausgebildet ist, die auf ein Gewinde am Ende des Stiftes (6) geschraubt ist.

12. Kaltgasgenerator nach Anspruch 1, **dadurch gekennzeichnet, dass** an einem Dehnelement (13) angeordnete, isolierte elektrische Leitungen (19) durch den Deckel (3) nach außen geführt sind.

13. Kaltgasgenerator nach Anspruch 10, **dadurch gekennzeichnet, dass** die Verschlusseinrichtung durch eine Betätigungsvorrichtung, die mechanisch über Druck auf den Kopf (7) des Stiftes (6) einwirkt oder das Dehnelement (13) bestromt, öffenbar ist.

14. Kaltgasgenerator nach Anspruch 1, **dadurch gekennzeichnet, dass** an dem Druckbehälter (1) ein Airbag oder eine anwendungsspezifische Einrichtung sowie eine Befülleinrichtung an der dichten Befestigungsmöglichkeit (20) mediendicht anbringbar ist.

## Claims

1. Cold gas generator with a pressure tank (1), which is fillable with compressed gas and comprises a closed base at one end and a tank opening at the other end, an electrically drivable closure device is insertable into the tank opening, which closure device is energized in a working position and opens an outlet opening of the closure device, **characterized in that** the closure device has an outlet opening for compressed gas between a cover (3) and a body (9), which outlet opening is openable by an electrically drivable expanding element (13) by virtue of a gap being produced by the expanding element (13) between the cover (3) and the body (9).

2. Cold gas generator according to Claim 1, **characterized in that** the closure device has a cover (3), which is fittable into the tank opening in a media-tight manner.

3. Cold gas generator according to Claim 2, **characterized in that** the closure device has a cover (3), which is detachably fitted into the tank opening.

4. Cold gas generator according to Claim 1, **characterized in that** the expanding element (13) is provided in the body (9), which is in the form of a pot.

5. Cold gas generator according to Claim 1, **characterized in that** the body (9) is held on the cover (3) in a closed position by means of a spring element (10), which is arranged under prestress, with a fastening element (6).

6. Cold gas generator according to Claim 1, **characterized in that** the cover (3) has, on its lower side (11), a circular rib (18), which corresponds to a likewise circular groove (18') at the edge of the pot-shaped body (9), in particular the depth of the groove (18') being slightly smaller than the height of the rib (18).

7. Cold gas generator according to Claim 1, **characterized in that** a suitable seal made from a flexible material for sealing off the outlet opening in a closed position of the closure device is introduced between the lower side (11) of the cover (3) and the edge of the pot-shaped body (9).

8. Cold gas generator according to Claim 1, **characterized in that** an annular gap (17) is located between the pot-shaped body (9) and the inner wall of the pressure tank (1).

9. Cold gas generator according to Claim 8, **characterized in that** longitudinal ribs are provided in the annular gap (17) between the pot-shaped body (9) and the inner wall of the pressure tank (1), by means of which longitudinal ribs the pot-shaped body (9) is kept centred, in particular the longitudinal ribs acting on the body (9) with a small amount of play.

10. Cold gas generator according to Claim 1, **characterized in that** a pin (6) with a head (7), preferably a screw, is provided which is connected to the body (9), in particular by means of a blind thread (8), and holds an expanding element (13).

11. Cold gas generator according to Claim 10, **characterized in that** the pin (6) is fixedly connected to the body (9) or is an integral component thereof, and the head (7) is in the form of a nut, which is screwed onto a thread at the end of the pin (6).

12. Cold gas generator according to Claim 11, **characterized in that** insulated electrical lines (19), which are arranged on an expanding element (13), are passed to the outside through the cover (3).

13. Cold gas generator according to Claim 10, **characterized in that** the closure device is openable by means of an actuating apparatus, which acts mechanically, by means of pressure, on the head (7) of the pin (6) or energizes the expanding element (13).

14. Cold gas generator according to Claim 1, **characterized in that,** on the pressure tank (1), an airbag or an application-specific device and a filling device is fittable in a media-tight manner on the sealtight fastening option (20).

## Revendications

1. Générateur de gaz froid avec un réservoir sous pression (1) pouvant être rempli avec du gaz comprimé et qui comprend, à une extrémité, un fond fermé et, à l'autre extrémité, une ouverture de réservoir, avec un dispositif de fermeture pouvant être activé de manière électrique et inséré dans l'ouverture de réservoir et qui est, dans une position de travail, soumis à un courant électrique et ouvre une ouverture de sortie du dispositif de fermeture, **caractérisé en ce que** le dispositif de fermeture présente, entre un couvercle (3) et un corps (9), une ouverture de sortie pour du gaz comprimé, laquelle peut être ouverte par un élément de dilatation (13) activable de manière électrique, l'élément de dilatation (13) engendrant une fente entre le couvercle (3) et le corps (9).

2. Générateur de gaz froid selon la revendication 1, **caractérisé en ce que** le dispositif de fermeture présente un couvercle (3) qui peut être monté de manière étanche aux fluides dans l'ouverture de réservoir.

3. Générateur de gaz froid selon la revendication 2, **caractérisé en ce que** le couvercle (3) peut être monté de manière amovible dans l'ouverture de réservoir.

4. Générateur de gaz froid selon la revendication 1, **caractérisé en ce que** l'élément de dilatation (13) est prévu dans le corps (9) qui est réalisé en forme de pot.

5. Générateur de gaz froid selon la revendication 1, **caractérisé en ce que** le corps (9) est maintenu dans une position fermée contre le couvercle (3) au moyen d'un élément de fixation (6), et ce par un élément ressort (10) disposé en prétension.

6. Générateur de gaz froid selon la revendication 1, **caractérisé en ce que** le couvercle (3) présente sur sa face inférieure (11) une nervure circulaire (18) qui correspond à une rainure (18'), également circulaire, ménagée sur le bord du corps (9) en forme de pot, la profondeur de la rainure (18') étant notamment légèrement inférieure à la hauteur de la nervure (18).

7. Générateur de gaz froid selon la revendication 1, **caractérisé en ce qu'**entre la face inférieure (11) du couvercle (3) et le bord du corps (9) en forme de pot est inséré un joint d'étanchéité approprié réalisé en un matériau souple permettant d'obturer de manière étanche l'ouverture de sortie lorsque le dispositif de fermeture se trouve dans une position fermée.

8. Générateur de gaz froid selon la revendication 1, **caractérisé en ce qu'**entre le corps (9) en forme de pot et la paroi intérieure du réservoir sous pression (1) se trouve une fente annulaire (17).

9. Générateur de gaz froid selon la revendication 8, **caractérisé en ce que** dans la fente annulaire (17) située entre le corps (9) en forme de pot et la paroi intérieure du réservoir sous pression (1) sont prévues des nervures longitudinales, grâce auxquelles le corps (9) en forme de pot est maintenu de manière centrée, les nervures longitudinales étant notamment en contact, avec un faible jeu, avec le corps (9).

10. Générateur de gaz froid selon la revendication 1, **caractérisé en ce qu'**il est prévue une tige (6) avec une tête (7), de préférence une vis, laquelle est reliée au corps (9), notamment par un taraudage borgne (8), et reçoit un élément de dilatation (13).

11. Générateur de gaz froid selon la revendication 10, **caractérisé en ce que** la tige (6) est reliée au corps (9) de manière fixe ou forme une seule pièce avec celui-ci, et que la tête (7) est réalisée sous forme d'écrou qui est vissé sur un filetage ménagé à l'extrémité de la tige (6).

12. Générateur de gaz froid selon la revendication 1, **caractérisé en ce que** des lignes électriques (19) isolées disposées sur un élément de dilatation (13) sont conduites vers l'extérieur à travers le couvercle (3).

13. Générateur de gaz froid selon la revendication 10, **caractérisé en ce que** le dispositif de fermeture peut être ouvert par un dispositif d'actionnement qui agit de manière mécanique par pression sur la tête (7) de la tige (6) ou qui soumet l'élément de dilatation (13) à un courant électrique.

14. Générateur de gaz froid selon la revendication 1, **caractérisé en ce qu'**un coussin gonflable ou qu'un dispositif propre à une application donnée ainsi qu'un dispositif de remplissage peuvent être montés de manière étanche aux fluides sur le moyen de fixation étanche (20).
